Europäisches Patentamt

European Patent Office

Office européen des brevets

(19)

(11) Numéro de publication : **0 575 251 A1**

(12) **DEMANDE DE BREVET EUROPEEN**

(21) Numéro de dépôt : **93401546.2**

(22) Date de dépôt : **16.06.93**

(51) Int. Cl.$^5$ : **G01S 7/00, G01S 7/298**

(30) Priorité : **18.06.92 FR 9207421**

(43) Date de publication de la demande :
**22.12.93 Bulletin 93/51**

(84) Etats contractants désignés :
**DE GB IT**

(71) Demandeur : **SOPELEM-SOFRETEC, Société dite:**
**53, Rue Casimir Périer**
**F-95870 Bezons (FR)**

(72) Inventeur : **Giraudy, Bernard Charles**
**35 rue Gabriel Péri**
**F-95150 Taverny (FR)**

(74) Mandataire : **Barnay, André François**
**Cabinet Barnay 72, rue d'Hauteville**
**F-75010 Paris (FR)**

(54) **Système de visualisation à distance d'informations de sortie d'au moins un radar.**

(57) Ce système de visualisation d'informations sur une unité de visualisation comprenant un écran de télévision, associé à une mémoire vidéographique, lesdites informations contenant au moins un signal vidéographique et des données de balayage, est caractérisé en ce qu'il comporte des moyens de conditionnement (24) des informations de sortie du radar, des moyens (25) de seuillage du signal vidéographique, des moyens (26) de numérisation du signal vidéographique après seuillage, des moyens (27) de compression spatio-temporelle du signal vidéographique après numérisation, des moyens (7) de transmission en série, selon un format déterminé, des données de balayage, du signal vidéographique compressé et d'informations de compression, en direction de l'unité de visualisation, qui comprend des moyens (30) de décompression du signal vidéographique et des moyens (31) de conversion du standard des coordonnées des informations contenues dans ce signal, d'un système de coordonnées polaires en un système de coordonnées cartésiennes, à l'aide des informations de compression et de balayage et des moyens (32) de pilotage du contenu de la mémoire.

FIG.4

La présente invention concerne un système de visualisation à distance d'informations de sortie d'au moins un radar.

Plus particulièrement, ce système est destiné à permettre la visualisation des informations de sortie d'un radar sur une unité de visualisation comprenant un écran de télévision associé à une mémoire vidéographique.

Il existe déjà dans l'état de la technique, des systèmes de visualisation des informations de sortie d'un radar, dans lesquels les différentes sorties de ce radar sont appliquées à une console de visualisation comprenant un afficheur de type classique.

Plus particulièrement, la sortie de signal vidéographique de ce radar est reliée à l'entrée correspondante de cet afficheur par un câble coaxial ou faisceau hertzien.

On conçoit que l'utilisation d'un tel câble présente un certain nombre d'inconvénients au niveau de l'implantation des différents composants de cet ensemble de radar, de la transmission des signaux et de la facilité d'utilisation de l'ensemble de radar.

Le but de l'invention est donc de résoudre ces problèmes, en proposant un système de visualisation à distance d'informations de sortie d'un radar, qui soit simple, fiable et qui permette de s'affranchir des différents problèmes liés à l'utilisation d'un câble coaxial.

A cet effet, l'invention a pour objet un système de visualisation à distance d'informations de sortie d'un radar sur une unité de visualisation comprenant un écran de télévision, associé à une mémoire vidéographique, lesdites informations contenant au moins un signal vidéographique et des données de balayage, caractérisé en ce qu'il comporte des moyens de conditionnement des différentes informations de sortie du radar, des moyens de seuillage du signal vidéographique, des moyens de numérisation du signal vidéographique après seuillage, des moyens de compression spatio-temporelle du signal vidéographique après numérisation, des moyens de transmission en série, selon un format déterminé, des données de balayage, du signal vidéographique compressé et d'informations de compression, en direction de l'unité de visualisation, cette unité de visualisation comprenant en outre des moyens de décompression du signal vidéographique et des moyens de conversion du standard des coordonnées des informations contenues dans le signal vidéographique, d'un système de coordonnées polaires en un système de coordonnées cartésiennes, à l'aide des informa- tions de compression et de balayage et des moyens de pilotage du contenu de la mémoire vidéographique en fonction du signal vidéographique et des données de balayage.

Avantageusement, les données de balayage comprennent des informations de synchronisation, de passage au Nord et de portée utile du faisceau radar.

Avantageusement également, les informations relatives à la compression spatio-temporelle comprennent des taux de regroupement spatial et temporel.

L'invention sera mieux comprise à l'aide de la description qui va suivre, donnée uniquement à titre d'exemple et faite en se référant aux dessins annexés, sur lesquels :

- Les figures 1 et 2 représentent deux exemples d'implantation d'un système de visualisation à distance selon l'invention.
- La figure 3 illustre une étude statistique des différents niveaux vidéographiques présents lors d'un balayage radar.
- La figure 4 représente un schéma synoptique illustrant le fonctionnement d'un système de visualisation selon l'invention.
- La figure 5 représente un schéma synoptique illustrant le fonctionnement d'un processeur de rémanence, non intégré au dispositif de décompression entrant dans la constitution d'un dispositif de visualisation selon l'invention.
- La figure 6 représente un écran d'un moniteur sur lequel deux images radar sont affichées simultanément.

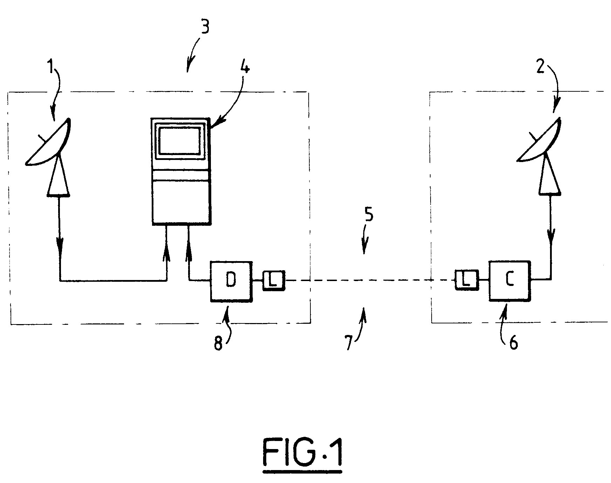

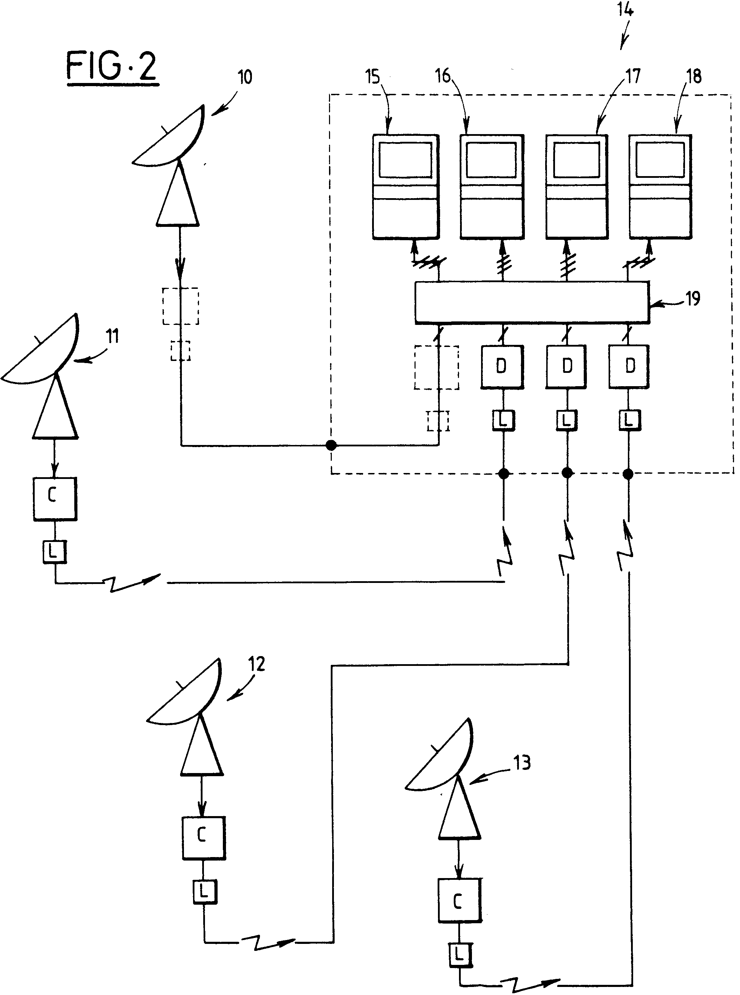

Ainsi qu'on peut le voir sur les figures 1 et 2, un système selon l'invention permet de visualiser à distance des informations de sortie d'un radar, sur une unité de visualisation.

Dans l'exemple illustré sur la figure 1, un premier radar 1 est relié par un câble coaxial à cette unité de visualisation, tandis qu'un second radar 2 est relié à celle-ci par des moyens de liaison particuliers qui seront décrits plus en détail par la suite. L'unité de visualisation est désignée de façon générale par la référence 3 et comprend un écran 4 de télévision associé de façon connue en soi à une mémoire vidéographique.

Les différentes informations de sortie d'un radar comprennent de façon connue en soi au moins un signal vidéographique et des données de balayage de celui-ci.

Le système de visualisation selon l'invention est utilisé dans l'exemple illustré sur cette figure, pour relier le radar 2 à l'unité de visualisation et est désigné par la référence générale 5 sur cette figure 1.

Ce système de visualisation comporte des moyens de traitement 6 connectés à la sortie du radar 2 placé à distance de l'unité de visualisation, ces moyens de traitement étant reliés à des moyens de transmission 7 qui seront décrits plus en détail, permettant d'assurer la liaison entre le radar 2 placé à distance et des moyens de traitement 8 associés à l'unité de visualisation.

Comme on peut le voir sur la figure 2, plusieurs radars par exemple quatre, désignés par les références 10, 11, 12 et 13, peuvent être raccordés à un ensemble 14 de visualisation, de façon analogue à celle représentée sur la figure 1, ce qui permet de regrouper en un seul endroit par exemple, différentes unités de visualisation associées aux différents radars.

Ces différentes unités de visualisation désignées par les références 15, 16, 17 et 18 sont alors reliées à la sortie de moyens de distribution 19 recevant en entrée les différentes informations provenant des différents radars à travers des moyens de transmission de ces informations.

La liaison entre le radar 10 et l'ensemble de visualisation est réalisée par câble coaxial dans l'exemple illustré sur cette figure 2, alors que les autres radars sont reliés à cet ensemble grâce à des moyens de liaison particuliers analogues à ceux reliant le radar 2 à l'unité de visualisation de la figure 1.

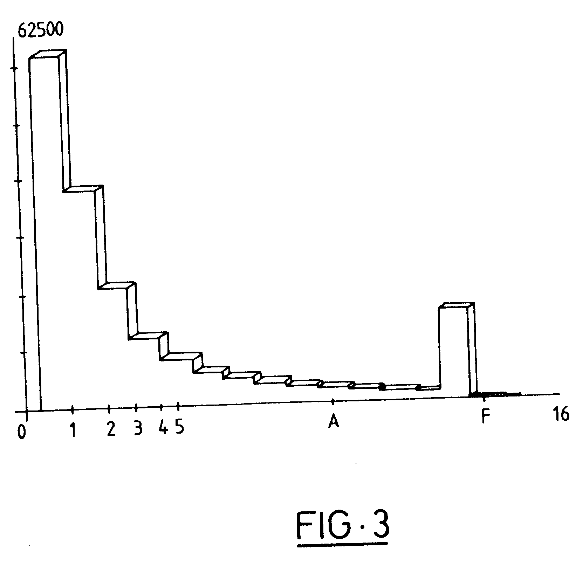

Ces moyens de liaison comprennent des moyens de transmission qui sont en fait basés sur l'utilisation d'une ligne de transmission en série des informations, car une étude statistique des niveaux vidéographiques présents lors d'un balayage radar, permet les différentes observations suivantes (figure 3) :

- sur les $30.10^6$ échantillons effectifs d'une image radar, $27.10^6$ appartiennent au niveau zéro et sont par conséquent vides d'informations,
- le bruit de fond est relativement important, (niveaux intermédiaires) et peut donc être partiellement supprimé par simple seuillage,
- après seuillage du bruit, il ne reste environ que 50000 échantillons représentant les informations utiles à la compréhension physiologique de l'image radar, soit en moyenne 100 bits par radiale de celle-ci.

On conçoit donc qu'à l'aide d'un repérage adapté des différents échantillons le long d'une radiale radar, et par simple seuillage, on peut transmettre les informations vidéographiques radar par l'intermédiaire d'un canal de transmission d'un débit de l'ordre de 128 kbits/s.

En fait, le débit des informations peut être amené à varier de 64kbits/s à 2 Mbits/s.

Ces différentes observations montrent qu'il est possible de réaliser la transmission des différentes informations utiles de sortie d'un radar sur un simple canal de transmission filaire ou utilisant des moyens d'émission et de réception de faisceaux hertziens à faible largeur de bande, de type classique.

Il est en effet relativement intéressant de pouvoir utiliser par exemple des liaisons filaires telles que des liaisons téléphoniques de type connu pour raccorder un ou plusieurs radars à une ou plusieurs unités de visualisation, cette liaison permettant de s'affranchir de tous les problèmes de distance de façon extrêmement simple.

Cependant, afin de restituer une image la plus proche possible de l'image radar d'origine, on peut ne supprimer qu'un minimum des échantillons constituant le bruit de fond, ce qui permet d'améliorer la compréhension de cette image.

Il est donc alors nécessaire de faire appel à une technique de compression d'informations et le taux de compression à atteindre une fois les différents zéros de l'image radar supprimés, est modeste de sorte qu'une simple compression spatio-temporelle peut être utilisée.

Cette compression spatio-temporelle consiste à regrouper N échantillons sur M radiales radar et à remplacer les M x N échantillons par la valeur maximale du signal vidéographique dans cette zone.

Le choix des différents coefficients M et N de regroupement spatial et temporel est fonction de la vitesse de transmission disponible dans le canal.

Ainsi, plus la vitesse de transmission est élevée, plus les coefficients M et N sont proches de l'unité et plus l'image vidéographique reconstruite est proche de l'image vidéographique radar d'origine.

Il est à noter que par ce principe aucune information n'est perdue, seule la géométrie d'un écho pouvant être modifiée, un échantillon allumé pouvant être reconstruit en M x N échantillons de même intensité.

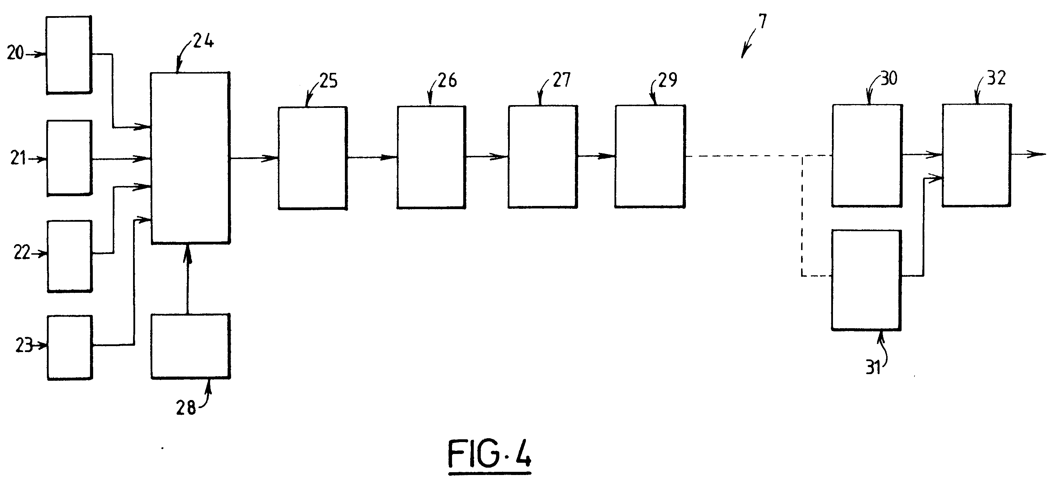

Si l'on se reporte à la figure 4, qui représente un schéma synoptique illustrant le fonctionnement d'un système de visualisation selon l'invention, on peut constater que les différentes informations de sortie d'un radar, c'est-à-dire le signal vidéographique radar, le signal de synchronisation, le signal de top de passage au Nord et le signal d'incrément, illustrés par les blocs 20, 21, 22 et 23 sur cette figure, sont reliés à des moyens de conditionnement de ces différentes informations de sortie, désignées de façon générale par la référence 24 sur cette figure.

C'est ainsi par exemple que le signal vidéographique passe par une chaîne d'amplification afin de présenter une amplitude correcte pour le reste des circuits du système.

Par ailleurs, il est également prévu des moyens de seuillage du signal vidéographique, désignés par la référence générale 25 sur cette figure, ces moyens de seuillage permettant de supprimer les différents échantillons d'images vides d'informations et au moins une partie du bruit de fond.

Il est à noter que ces moyens de seuillage peuvent être ajustés manuellement ou automatiquement.

Le système représenté sur cette figure 4, comporte également des moyens de numérisation du signal vidéographique après seuillage, ces moyens de numérisation étant désignés par la référence générale 26 sur cette figure et des moyens de compression spatio-temporelle du signal vidéographique après numérisation, désignés par la référence générale 27 sur cette figure.

Ces moyens de compression comprennent par exemple des moyens de regroupement du résultat de la numérisation du signal vidéographique.

En fait, ce système est basé sur l'utilisation de cartes de type Simple Europe courtes, qui acceptent en entrée les sorties de la plupart des radars délivrant des informations d'incréments de top nord et assurent le conditionnement des différents signaux, le seuillage adaptatif ou manuel du signal vidéographique radar, la numérisation de ce signal vidéographique radar, le sous-échantillonnage par exemple à 10 MHz du résultat de la numérisation, de même que la génération d'une mire analogique permettant le contrôle du système.

Cette mire est engendrée par exemple par des moyens de génération désignés par la référence générale 28 sur cette figure.

Bien entendu, différents réglages sont possibles et concernent le standard des signaux d'interface, le seuillage adaptatif ou manuel, le contrôle automatique ou manuel de dynamique, le début et la fin de radiale et une fonction de test.

Par ailleurs, le reste des composants de ces cartes assure la génération d'horloges en fonction des différents taux de compression spatiale et temporelle M et N, le formatage des données à transmettre et le regroupement des informations vidéographiques dans la zone M x N suivant :
- la valeur maximale dans la zone,
- la valeur minimale dans la zone, et
- la valeur moyenne à l'intérieur de la zone.

Une fois ces différentes opérations effectuées, les signaux résultant sont entrés dans une mémoire du type premier entré, premier sorti (FIFO) désignée par la référence générale 29 sur cette figure, cette mémoire entrant dans la constitution des moyens de transmission, par exemple 7, de ces informations vers l'unité de visualisation.

Ces moyens de transmission assurent alors la transmission en série selon un format déterminé, des différentes données de balayage, du signal vidéographique compressé et d'informations de compression en direction de cette unité de visualisation. Celle-ci comprend des moyens 30 de décompression du signal vidéographique réalisant les transformations inverses opérées par les différents moyens décrits précédemment et des moyens 31 de conversion du standard des coordonnées des différentes informations contenues dans le signal vidéographique transmis.

En effet, ces informations contenues dans le signal vidéographique de sortie d'un radar sont en coordonnées polaires et pour assurer la visualisation correcte de ces informations sur un écran de télévision, il est souhaitable de convertir le standard des coordonnées de ces informations du système de coordonnées polaires en un système de coordonnées cartésiennes.

Bien entendu, ces différentes opérations de décompression et de conversion sont réalisées à l'aide des différentes informations de compression et de balayage transmises.

La conversion de standard permet d'effectuer directement les différentes écritures des échantillons dans l'espace physique de la mémoire vidéographique associée à l'écran.

On notera que ces différentes opérations sont classiques et s'effectuent en temps réel.

Bien entendu, ces différentes coordonnées peuvent être modifiées en fonction de différents paramètres tels que par exemple la position du radar par rapport par exemple à l'emplacement de l'unité de visualisation, etc...

Ensuite, ces différentes informations sont utilisées par des moyens 32 de pilotage du contenu de la mémoire vidéographique associée à l'écran, en fonction du signal vidéographique et des données de balayage comme cela sera décrit plus en détail par la suite.

On a indiqué précédemment que les moyens de transmission assurent la transmission des différentes informations en série selon un format déterminé et ce format peut être défini de la façon suivante.

Plusieurs informations sont à transmettre afin de reconstituer l'aspect temporel du balayage radar et les informations transmises peuvent être par exemple formées par :
- les informations de rotation d'antenne
  * synchronisation
  * Top nord
- le taux de compression M x N
- la portée radar utile
  d'où le format de transmission

| SS | 1 | PR | 1 | LA | M | TN | N | 1 | PR | 1 | ADR | D | ACR | D |
|----|---|----|---|----|---|----|---|---|----|---|-----|---|-----|---|
| Synchro | Portée Radar | | | Format | | | | Incrément | | | Données | | | |

avec :

     * Synchro secteur

$$SS \quad \boxed{D\,16 \qquad\qquad\qquad D\,1 \\ 1000\ 0000\ 0000\ 0000}$$

        La présence de ce code indique le début de transmission des informations relatives à une zone vidéographique M x N.

     * Portée radar

$$PR \quad \boxed{D\,16\,D\,15 \qquad\qquad D2\,D\,1 \\ 1 \mid XXX\ XXXX\ XXXX\ XXX \mid 1}$$

        Indique la longueur d'une radiale avec D2 = LSB = 200 ns

     * Format

| D16 | D13 | D12 | D9 | D8 | D5 | D4 | D1 |
|-----|-----|-----|----|----|----|----|----|
| LA | | M | | TN | | N | |

   - LA : longueur de l'adresse pixel dans les données transmises D13 --> D16

| Nbre de bits | LA |
|-------------:|----|
| 12 | 0 |
| 11 | 1 |
| 10 | 2 |
| 9 | 3 |
| 8 | 4 |
| 7 | 5 |

   - M : Taux de regroupement spatial (nombre de radiales) D9 --> D12
   - TN : Code Top Nord D5 --> D8 un contenu égal à F dans ce champ indique le passage au Nord.
   - N : Taux de regroupement temporel (nombre d'échantillons le long de la radiale).

$$D\,1 - - - - - - - - - - - - - > D\,4$$

     * Incrément

$$\boxed{D\,16\,D\,15 \qquad\qquad D2\,D\,1 \\ 1 \mid XXX\ XXXX\ XXXX\ XXX \mid 1}$$

        Indique la valeur moyenne de l'incrément de rotation d'antenne avec D2 = LSB = 200 ns.
        Ce champ n'est présent que lorsque le Top Nord est présent.

     * Données

| AAAA AAAA AAAA | DDDD |
|---|---|
| Adresses | Données |

- Adresse : correspond à l'adresse de la zone M x N le long de la radiale.

Ce champ est variable en fonction du champ LA.

- Données : Valeur de la vidéo de la zone M x N repérée par le champ adresse sur 4 bits (16 niveaux).

L'analyse de ces différentes informations permet alors aux moyens de pilotage 32 de reconstruire dans la mémoire vidéographique, une image radar la plus proche possible de l'image délivrée par le radar lui-même.

On a indiqué précédemment que l'unité de visualisation peut comprendre au moins un écran de télévision associé à une mémoire vidéographique. Pour améliorer la visualisation de l'image radar sur cet écran, les moyens de pilotage du contenu de cette mémoire vidéographique comprennent également un processeur de rémanence de traitement du contenu de certaines zones de cette mémoire vidéographique, selon une loi déterminée, pour engendrer un phénomène de pseudo-rémanence de certains points de l'image radar visualisée sur l'écran.

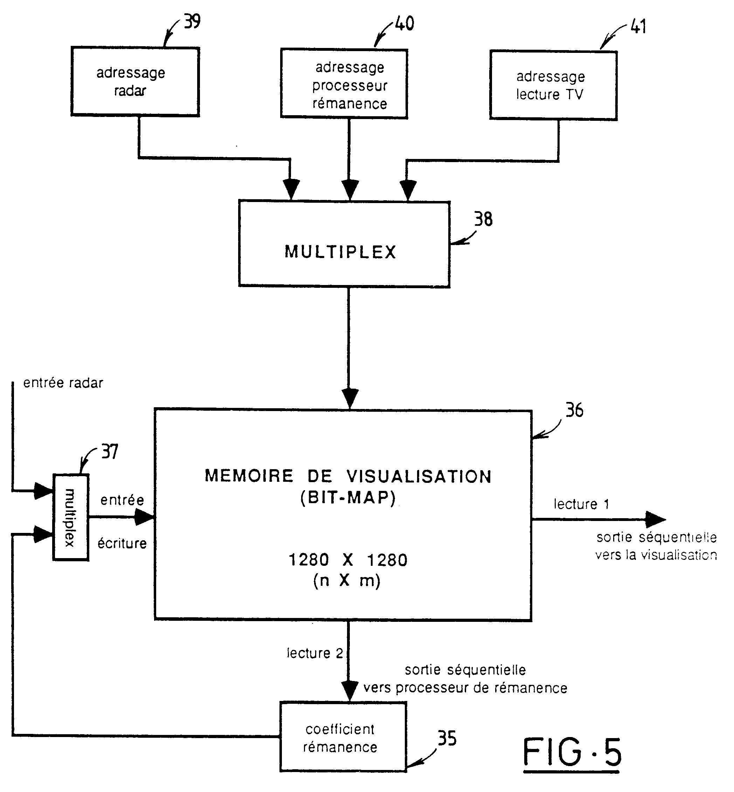

Ce processeur, dont le fonctionnement est illustré sur la figure 5, a été conçu pour répondre au problème général de la présentation d'une image radar sur un écran de télévision en noir et blanc ou en couleurs.

Ce processeur de rémanence 35 connecté à la mémoire vidéographique 36, effectue l'effacement progressif par exemple du contenu de certaines zones de cette mémoire afin de permettre la présentation à chaque tour radar, de la situation en temps réel ainsi que la visualisation classique d'une situation radar, intimement liée à la rémanence des phosphores utilisés dans les tubes à rayons cathodiques des consoles radar classiques.

L'observation des phénomènes visuels dus à l'asynchronisme des deux types de balayage (radar et TV) ainsi que la physiologie de l'oeil humain, permet la mise au point d'un processeur simple et performant permettant un excellent rendu de l'effet de pseudo-rémanence.

Les accès à la mémoire vidéographique s'effectuent selon les différents principes suivants :

- en écriture par l'entrée radar à travers des moyens de multiplexage 37, ce qui correspond à un cycle de lecture avec réécriture en mémoire de l'ancienne valeur contenue dans celle-ci, si celle-ci est supérieure à l'amplitude de la donnée radar, alors que dans le cas inverse, on écrit la donnee radar dans la mémoire,
- en écriture par le processeur de rémanence 35 à travers le multiplexeur 37, ce qui correspond à un cycle de lecture et de réécriture de la donnée mémorisée avec par exemple une décroissance établie selon une loi programmable par fonctions linéaires ou exponentielles,
- en lecture par la sortie TV, ce qui correspond à un cycle de lecture séquentielle des données mémorisées pour présentation de l'image sur l'écran.

Cette mémoire est bien entendu contrôlée de façon classique à travers un multiplexeur 38, par des moyens d'adressage radar 39, des moyens d'adressage de processeur de rémanence 40 et des moyens d'adressage de lecture TV 41.

On conçoit donc que ce système permet de visualiser sur un écran de télévision standard à balayage en X, Y, c'est-à-dire en coordonnées cartésiennes, les images issues d'un capteur fonctionnant en $\rho$, $\theta$, c'est-à-dire en coordonnées polaires.

Le capteur est dans ce cas une antenne radar associée à son électronique de commande et le système permet une visualisation de l'image radar respectant l'ergonomie des consoles classiques du type PPI (Panoramic Plot Indicator) en conservant la qualité de l'imagerie liée à la rémanence des phosphores utilisés et le processeur de rémanence, associé à un convertisseur de standard $\rho,\theta/X,Y$, permet d'engendrer un phénomène lumineux de pseudo-rémanence respectant l'accès visuel des lois de décroissance énergétique de ces phosphores.

Bien entendu, ce processeur de rémanence peut être réalisé à l'aide de composants discrets ou sous forme programmée et cette rémanence peut être réglable par exemple de 3 secondes à l'infini, ce qui permet par exemple d'obtenir un tracé de l'historique des trajectoires permettant le suivi d'une ou de plusieurs cibles mobiles.

Chaque unité peut également recevoir des informations de plusieurs radars disposés à distance les uns des autres.

L'affichage simultané de ces informations est alors réalisé en fonction de l'emplacement de chacun de ceux-ci en utilisant par exemple des couleurs différentes.

On conçoit donc que par la mise en oeuvre d'algorithmes spécialisés de compression du signal, il est possible de transformer les informations radar, à savoir le signal vidéographique et les données de balayage en informations numériques série facilement transmissibles sur de très longues distances.

Il est à noter que les algorithmes de compression sont directement issus de ceux utilisés en traitement de l'image.

Cette compression permet par exemple :

- sur un site radar, de transporter l'information par fils torsadés et non plus par câble coaxial ou par faisceau hertzien,
- entre deux points distants, de transporter l'information par un canal adapté en utilisant des faisceaux hertziens ou une liaison filaire classique.

Dans ce dernier cas, plusieurs lignes sont utilisables comme par exemple celles des réseaux téléphoniques spécialisés.

Les distances de transmission peuvent être quelconques et à la réception, l'information peut être visualisée avec un retard de l'ordre de la seconde par rapport à l'instant d'émission de celle-ci sur la ligne.

Les unités de visualisation peuvent quant à elles comporter des écrans dits à haute définition, ce qui permet d'obtenir une excellente qualité de reproduction des images.

L'invention permet également l'affichage simultané de plusieurs images radar, complètes ou partielles, sur un même moniteur, les radars étant disposés à distance les uns des autres.

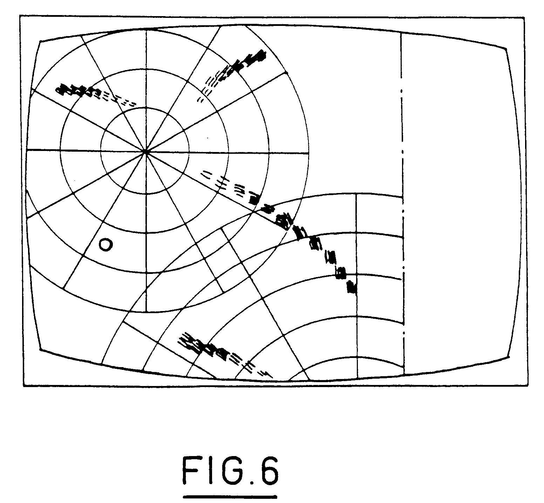

La figure 6 donne un exemple de l'affichage simultané de deux images radar qui permet par exemple de suivre, sans discontinuité, la trajectoire d'un aéronef, ou d'un missile, qui vole successivement dans le champ des deux radars.

Il est possible d'envisager l'affichage simultané de quatre images radar, et ceci à l'aide d'une seule mémoire vidéographique.


## Revendications

1. Système de visualisation à distance d'informations de sortie d'un radar (2) sur une unité de visualisation (3) comprenant un écran de télévision (4), associé à une mémoire vidéographique (36), lesdites informations contenant au moins un signal vidéographique et des données de balayage, caractérisé en ce qu'il comporte des moyens de conditionnement (24) des différentes informations de sortie du radar, des moyens (25) de seuillage du signal vidéographique, des moyens (26) de numérisation du signal vidéographique après seuillage, des moyens (27) de compression spatio-temporelle du signal vidéographique après numérisation, des moyens (7;31) de transmission en série selon un format déterminé, des données de balayage, du signal vidéographique compressé et d'informations de compression, en direction de l'unité de visualisation, cette unité de visualisation comprenant en outre des moyens (30) de décompression du signal vidéographique et des moyens (31) de conversion du standard des coordonnées des informations contenues dans le signal vidéographique d'un système de coordonnées polaires en un système de coordonnées cartésiennes, à l'aide des informations de compression et de balayage et des moyens (32) de pilotage du contenu de la mémoire vidéographique (36) en fonction du signal vidéographique et des données de balayage.

2. Système selon la revendication 1, caractérisé en ce que les données de balayage comprennent des informations de synchronisation, de passage au Nord et de portée utile du faisceau radar.

3. Système selon la revendication 1 ou 2, caractérisé en ce que les informations relatives à la compression spatio-temporelle comprennent des taux de regroupement spatial (M) et temporel (N).

4. Système selon la revendication 1, 2 ou 3, caractérisé en ce qu'il comporte des moyens (28) de génération d'une mire analogique de contrôle.

5. Système selon l'une quelconque des revendications précécentes, caractérisé en ce que les moyens de transmission (7) comprennent une mémoire (29) du type premier entré, premier sorti.

6. Système selon l'une quelconque des revendications précédentes, caractérisé en ce que les moyens de transmission (7) comprennent une liaison filaire.

7. Système selon la revendication 6, caractérisé en ce que la liaison filaire est une liaison téléphonique.

8. Système selon l'une quelconque des revendications 1 à 5, caractérisé en ce que les moyens de transmission comprennent des moyens d'émission et de réception de faisceaux Hertziens.

9. Système selon l'une quelconque des revendications précédentes, caractérisé en ce que les moyens (32) de pilotage du contenu de la mémoire vidéographique (36) comprennent un processeur de rémanence (35) de traitement du contenu de certaines zones de la mémoire vidéographique selon une loi déterminée, pour engendrer un phénomène de pseudo-rémanence de certains points de l'image radar visualisée sur l'écran.

FIG·1

# FIG·2

FIG. 3

FIG.4

39 adressage radar

40 adressage processeur rémanence

41 adressage lecture TV

38 MULTIPLEX

entrée radar

37 multiplex

entrée

écriture

36 MEMOIRE DE VISUALISATION
(BIT-MAP)

1280 X 1280
(n X m)

lecture 1

sortie séquentielle
vers la visualisation

lecture 2

sortie séquentielle
vers processeur de rémanence

35 coefficient rémanence

FIG·5

FIG.6

Office européen
des brevets

**RAPPORT DE RECHERCHE EUROPEENNE**

Numero de la demande

EP    93 40 1546

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | US-A-4 348 693 (CAULDWELL)<br>* abrégé *<br>* colonne 7, ligne 8 - colonne 12, ligne 441; figures 5-9 *<br>--- | 1 | G01S7/00<br>G01S7/298 |
| A | DE-A-3 414 850 (LICENTIA PATENT-VERWALTUNGS-GMBH)<br>* le document en entier *<br>--- | 1 | |
| A | EP-A-0 202 132 (THOMSON-CSF)<br>* colonne 1, ligne 19 - colonne 3, ligne 9; figure 1 *<br><br>----- | 1,9 | |
| | | | **DOMAINES TECHNIQUES RECHERCHES (Int. Cl.5 )** |
| | | | G01S |
| | Le présent rapport a été établi pour toutes les revendications | | |

| Lieu de la recherche | Date d'achèvement de la recherche | Examinateur |
|---|---|---|
| LA HAYE | 17 AOUT 1993 | WRIGHT J.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)